# EUROPEAN PATENT APPLICATION

(11) **EP 4 749 747 A1**
(43) Date of publication of application: **27.05.2026**
(21) Application number: 25795023.8
(22) Date of filing: 21.04.2025
(51) Int. Cl.: H01M 10/0567, H01M 10/42, H01M 10/0569, H01M 10/0568, H01M 4/38, H01M 4/485, H01M 10/052, H01M 4/525, H01M 4/505, H01M 4/131

(54) **ELECTROLYTE COMPOSITION WITH IMPROVED HIGH-TEMPERATURE SAFETY AND LITHIUM SECONDARY BATTERY COMPRISING SAME**

(30) Priority: 24.04.2024 KR 20240054519
(71) Applicant: LG Energy Solution, Ltd., Seoul 07335 (KR)
(72) Inventor: SUH, Soo Min, Daejeon 34122 (KR); LEE, Chul Haeng, Daejeon 34122 (KR); AHN, Kyoung Ho, Daejeon 34122 (KR); OH, Young Ho, Daejeon 34122 (KR); JEONG, You Kyeong, Daejeon 34122 (KR); IM, Tae Yeong, Daejeon 34122 (KR)
(74) Representative: Hoffmann Eitle
(86) International application number: PCT/KR2025/005360
(87) International publication number: WO 2025/225985

(57) **Abstract**

The present disclosure relates to an electrolyte composition for lithium secondary batteries. The electrolyte composition for lithium secondary batteries includes a fluorine-substituted linear ester solvent and a fluorine-substituted acrylic additive as a non-aqueous organic solvent and an electrolyte additive, respectively, thereby enabling uniform formation of a solid electrolyte interface layer (SEI layer) with high lithium ion conductivity and excellent heat resistance on the negative electrode surface during activation of the lithium secondary battery. Accordingly, since the reactivity between the negative electrode active material and the electrolyte composition is significantly reduced, the temperature at which heat generation begins between them (i.e., heat onset temperature) increases, thereby suppressing heat generation due to negative electrode deterioration and the like. In addition, the lithium secondary battery including the electrolyte composition has an advantage of excellent high temperature safety since it can minimize side reactions of the electrolyte composition occurring on the negative electrode surface when exposed to high temperature.

## Description

### [Technical Field]

The present disclosure relates to an electrolyte composition with improved high temperature safety and a lithium secondary battery including the same.

This application claims the benefit of priority from Korean Patent Application No. 10-2024-0054519, filed on April 24, 2024, the entire contents disclosed therein are incorporated by reference into this disclosure.

### [Background]

Recently, lithium secondary batteries have been widely applied not only to small devices such as portable electronic devices, but also to medium and large-sized devices such as battery packs of hybrid vehicles or electric vehicles, and energy storage systems.

Such lithium secondary batteries are manufactured by applying and drying a composition including an electrode active material on a current collector to an appropriate thickness and length or by forming the electrode active material itself into a film form to manufacture a positive electrode and a negative electrode, then winding or stacking them together with a separator as an insulator therebetween to form an electrode assembly, placing it in a can or similar container, and then injecting an electrolyte.

As the demand for such lithium secondary batteries increases, research to improve the safety of secondary batteries is also actively conducted (refer to Korean Patent Application Publication No. 10-2022-0105936).

### [Summary]

### [Technical Problem]

The present disclosure is directed to provide an electrolyte composition that can more effectively suppress side reactions with an electrolyte that occur on the negative electrode surface when a lithium secondary battery is exposed to high temperature, and a lithium secondary battery including the same.

### [Technical Solution]

To solve the above-described problem, the present disclosure provides an electrolyte composition including a lithium salt, an electrolyte additive and a non-aqueous organic solvent, wherein the non-aqueous organic solvent includes a fluorine-substituted linear ester solvent in a range of 60 vol.% or more and less than 100 vol.%, and a heat flow rate of 50.0 W/g or less is exhibited within a temperature range of 250°C to 400°C when measuring heat flow rate for a mixture including a negative electrode active material at 100% state of charge and the electrolyte composition in a weight ratio of 1:0.5.

For example, the heat flow may be in a range of 0.5 W/g to 30 W/g. Here, the electrolyte additive may include one or more among compounds represented by the following Chemical Formula 1:

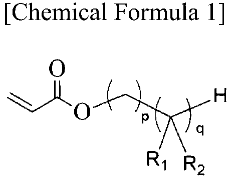

In Chemical Formula 1,
R₁ and R₂ are each a fluoro group or a C₁₋₁₀ fluorinated alkylene group,
p is an integer of 0 to 4, and
q is an integer of 1 to 10.

Specifically, the compound represented by Chemical Formula 1 may include one or more among acrylic compounds represented by the following <Structural Formula 1> to <Structural Formula 10>:

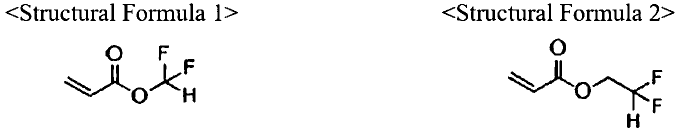

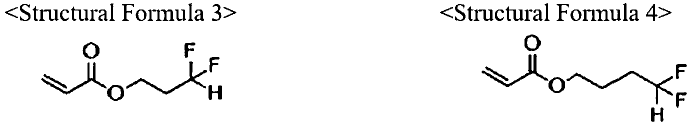

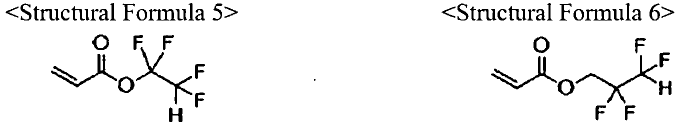

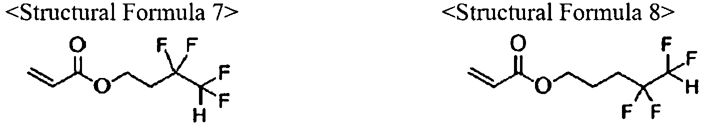

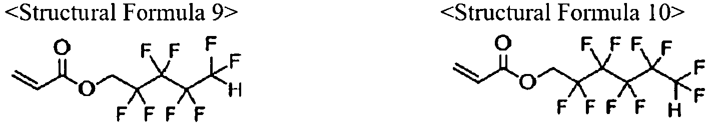

In addition, the electrolyte additive may be included in a range of more than 0 wt.% and 5 wt.% or less based on the total weight of the electrolyte composition.

Moreover, the electrolyte additive may further include one or more cyclic carbon compounds among vinylene carbonate (VC), 1,3-propane sultone (PS), ethylene sulfate (ESa), propylene sulfate (PSa), or butylene sulfate (BSa).

The cyclic carbon compound may be included in a range of 10 parts by weight or more and less than 50 parts by weight based on 100 parts by weight of the total electrolyte additive.

In addition, the fluorine-substituted linear ester solvent may include one or more among compounds represented by the following Chemical Formula 2:

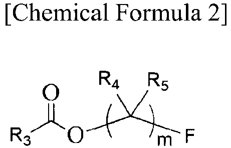

In Chemical Formula 2,
R₃ is hydrogen or a C_{1~6} alkyl group,
R₄ and R₅ are each hydrogen, a fluoro group or a C₁₋₁₀ fluorinated alkylene group, and
m is an integer of 1 to 6.

Specifically, the fluorine-substituted linear ester solvent may include one or more among compounds represented by the following <Structural Formula 11> to <Structural Formula 16>:

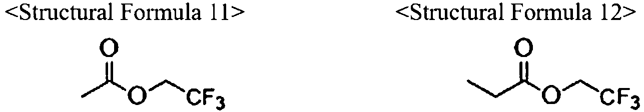

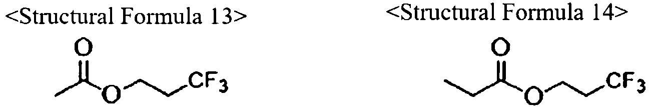

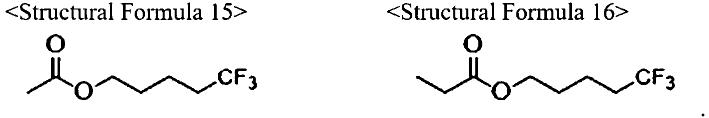

In addition, the non-aqueous organic solvent may include one or more carbonate-based solvents among ethyl methyl carbonate (EMC), dimethyl carbonate (DMC), diethyl carbonate (DEC), ethylene carbonate (EC), propylene carbonate (PC) or butylene carbonate (BC).

In this case, the carbonate-based solvent may be included in a range of more than 0 vol.% and 40 vol.% or less based on the total weight of the non-aqueous organic solvent.

Meanwhile, the lithium salt includes Li⁺ as a cation, and may include one or more of the following anions: BF₄⁻, B₁₀Cl₁₀⁻, ClO₄⁻, AlO₂⁻, AlCl₄⁻, PF₆⁻, SbF₆⁻, AsF₆⁻, BF₂C₂O₄⁻, B(C₂O₄)₂⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, (C₂O₄)₂PF₂⁻,CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or ((C(CN))₂NC(CF₃))N⁻.

In addition, the negative electrode active material may be one or more of the following silicon-based negative electrode active materials: silicon (Si), silicon carbide (SiC) or silicon oxide (SiOᵣ, where 0.8≤r≤2.5).

Further, the present disclosure provides a lithium secondary battery comprising an electrode assembly including a positive electrode, a negative electrode and a separator provided between the positive electrode and the negative electrode; and the electrolyte composition according to the present disclosure described above, impregnated in the electrode assembly.

Here, the positive electrode may include a positive electrode active layer provided on at least one surface of a positive electrode current collector and including a positive electrode active material represented by the following Chemical Formula 3:

[Chemical Formula 3] Liₓ[Ni_{y}Co_{z}Mn_{w}M¹ᵥ]O₂

In Chemical Formula 3,
M¹ is one or more elements among W, Cu, Fe, V, Cr, Ti, Zr, Zn, Al, In, Ta, Y, La, Sr, Ga, Sc, Gd, Sm, Ca, Ce, Nb, Mg, B, or Mo,
x, y, z, w and v are each 0.9≤x≤1.30, 0.6≤y<1, 0<z≤0.2, 0<w≤0.2, 0≤v≤0.1, provided that y+z+w+v=1.

### [Advantageous Effects]

The electrolyte composition according to the present disclosure can uniformly form a solid electrolyte interface layer (SEI layer) with high lithium ion conductivity and excellent heat resistance on the negative electrode surface during activation of the lithium secondary battery. Accordingly, since the reactivity between the negative electrode active material and the electrolyte composition is significantly reduced, the temperature at which heat generation begins between them (i.e., heat onset temperature) increases, thereby suppressing heat generation due to negative electrode deterioration and the like. In addition, the lithium secondary battery including the electrolyte composition has an advantage of excellent high temperature safety since it can minimize side reactions of the electrolyte composition occurring on the negative electrode surface when exposed to high temperature.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.

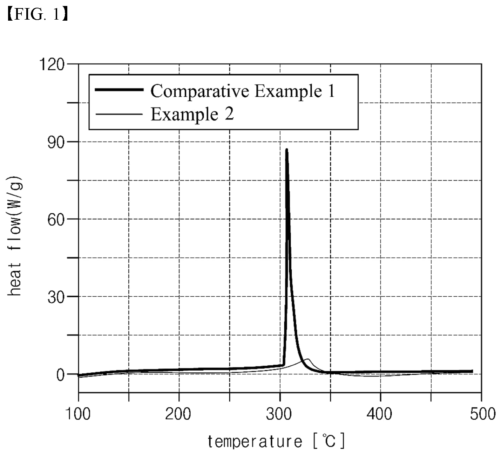

FIG. 1 is a graph showing the heat flow rate of an electrolyte composition with and without the use of an electrolyte additive according to the present disclosure.

### [Detailed Description]

The present disclosure may have various modifications and various embodiments, and specific embodiments will be described in detail in the detailed description.

In the present disclosure, terms such as "comprise" or "have" are intended to designate the presence of features, numbers, steps, operations, components, parts, or combinations thereof described in the specification, and it should be understood that they do not exclude in advance the possibility of the presence or addition of one or more other features, numbers, steps, operations, components, parts, or combinations thereof.

In addition, in the present disclosure, when a part such as a layer, film, region, plate, or the like is described as being "on" another part, this includes not only a case where it is "directly on" another part, but also a case where still another part is present therebetween. Conversely, when a part such as a layer, film, region, plate, or the like is described as being "under" another part, this includes not only a case where it is "directly under" another part, but also a case where still another part is present therebetween. In addition, being disposed "on" in the present application may include cases of being disposed not only in an upper portion but also in a lower portion.

In addition, in the present disclosure, "including as a main component" means including a defined component in a range of 50 wt.% or more (or 50 vol.% or more), 60 wt.% or more (or 60 vol.% or more), 70 wt.% or more (or 70 vol.% or more), 80 wt.% or more (or 80 vol.% or more), 90 wt.% or more (or 90 vol.% or more), or 95 wt.% or more (or 95 vol.% or more) with respect to the total weight (or total volume). For example, "including a linear ester solvent as a main component as a non-aqueous organic solvent" may mean including the linear ester solvent in a range of 50 vol.% or more, 60 vol.% or more, 70 vol.% or more, 80 vol.% or more, 90 vol.% or more, or 95 vol.% or more with respect to the total volume of the non-aqueous organic solvent. In some cases, it may mean that the entire non-aqueous organic solvent consists of the linear ester solvent and is included at 100 vol.%.

Since lithium secondary batteries operate at high driving voltage, aqueous electrolytes with high reactivity with lithium cannot be used, so organic electrolytes are generally used. The organic electrolyte is prepared by dissolving a lithium salt in an organic solvent. The organic solvent uses materials that are stable at high voltage, have high ion conductivity and dielectric constant, and have low viscosity.

Generally, carbonate-based polar non-aqueous solvents are used as such organic solvents, and the carbonate-based non-aqueous solvents cause irreversible reactions in which charge is excessively consumed due to side reactions between the negative electrode/positive electrode and the electrolyte during initial charging of the lithium secondary battery. The irreversible reactions form a passivation layer such as a solid electrolyte interface layer (hereinafter, SEI layer) on the negative electrode surface, and the SEI layer prevents electrolyte decomposition on the negative electrode surface during charging and discharging and serves as an ion tunnel. Therefore, the higher the stability and the lower the resistance of the SEI layer, the more the lifespan of the lithium secondary battery can be improved.

Meanwhile, various additives are being used in electrolytes for stabilization of the SEI layer, and since the SEI layer formed using conventional general additives is easily degraded at high temperature, the SEI layer formed by applying conventional general additives has reduced stability at high temperature.

In consideration of such points, the present disclosure provides a technology that can further enhance the high temperature safety of lithium secondary batteries by suppressing side reactions with electrolytes occurring on the negative electrode surface at high temperature.

Hereinafter, the present disclosure will be described in more detail with reference to the accompanying drawings.

### Electrolyte Composition

The present disclosure provides an electrolyte composition including
a lithium salt, an electrolyte additive and a non-aqueous organic solvent,
wherein the non-aqueous organic solvent includes a fluorine-substituted linear ester solvent in a range of 60 vol.% or more and less than 100 vol.%, and
a heat flow rate of 50.0 W/g or less is exhibited within a temperature range of 250°C to 400°C when measuring heat flow rate for a mixture including a negative electrode active material at 100% state of charge and the electrolyte composition in a weight ratio of 1:0.5.

The electrolyte composition according to the present disclosure is a liquid electrolyte that can uniformly form a solid electrolyte interface layer (SEI layer) with high lithium ion conductivity and excellent heat resistance on the negative electrode surface during activation of the lithium secondary battery. Accordingly, since the reactivity between lithium ions inserted into or deintercalated from the negative electrode active material during charging of the lithium secondary battery and the electrolyte composition is significantly reduced, the temperature at which heat generation begins between them (i.e., heat onset temperature) increases, thereby suppressing heat generation due to negative electrode deterioration and the like. In addition, the lithium secondary battery including the electrolyte composition has an advantage of excellent high temperature safety since it can minimize side reactions of the electrolyte composition occurring on the negative electrode surface when exposed to high temperature.

For this purpose, the electrolyte composition comprises a lithium salt, an electrolyte additive and a non-aqueous organic solvent. The lithium salt, electrolyte additive and non-aqueous organic solvent may have predetermined configurations.

Specifically, the electrolyte additive may include an organic compound, and the organic compound may be a fluorine-substituted acrylic compound. Specifically, the electrolyte additive may include one or more among compounds represented by the following Chemical Formula 1:

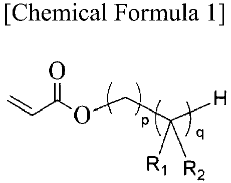

In Chemical Formula 1,
R₁ and R₂ are each a fluoro group or a C₁₋₁₀ fluorinated alkylene group,
p is an integer of 0 to 4, and
q is an integer of 1 to 10.

Specifically, in Chemical Formula 1,
R₁ and R₂ are each a fluoro group or a fluorinated methyl group,
p is an integer of 0 to 2, and
q is an integer of 3 to 6.

The present disclosure can minimize side reactions of the electrolyte composition when exposed to high temperature by enhancing the heat resistance and uniformity of the film formed on the negative electrode surface, i.e., the SEI layer. Specifically, the SEI layer is formed on the electrode surface by irreversible decomposition of the electrolyte before lithium ions are intercalated into the negative electrode active material. The SEI layer has the property of allowing lithium ions to pass through but blocking electron movement. Therefore, once the SEI layer is formed, electrolyte decomposition due to electron movement between the electrode and electrolyte is suppressed and only intercalation and deintercalation of lithium ions are selectively enabled. That is, the SEI layer serves as a protective film that prevents the electrolyte from continuously decomposing, making it a very important factor in lithium secondary batteries.

The SEI layer is composed of Li₂CO₃, LiF and Li₂O formed by side reactions of electrolyte components during activation of the secondary battery. In addition, additives included in the electrolyte can participate together in side reactions forming the SEI layer to control the properties and performance of the SEI layer.

In this regard, fluorine-containing compounds that have been used as conventional electrolyte additives have a structure that cannot generate fluorine-containing side reaction products with high heat resistance during activation of the secondary battery. Specifically, the conventional electrolyte additives have fluorinated alkyl groups (e.g., -CF₃, -CF₂CF₃, - CF₂CF₂CF₃, etc.) in which all hydrogen atoms of hydrocarbon groups are substituted with fluorine elements. The fluorinated alkyl groups include C-F bonds and C-C bonds. The C-F bonds have greater binding energy compared to C-H bonds and are not easily broken by heat. In addition, in the skeleton of the C-C bonds, -CF₂- likewise has higher binding energy than - CH₂- and has the characteristic that rotation of the carbon chain is difficult. Therefore, the electrolyte additives have been performing the role of enhancing the heat resistance of the components themselves included in the electrolyte since they are difficult to form side reaction products containing fluorine elements during the activation process of the secondary battery.

However, the compound represented by Chemical Formula 1 according to the present disclosure includes an acrylate group having an unsaturated hydrocarbon group and an alkyl group bonded to the oxygen atom of the acrylate group. In this case, the alkyl group has a chemical structure in which carbon atoms located at the terminal are partially substituted with fluorine elements. Therefore, some C-H bonds included can be easily broken during activation of the secondary battery, so it can have higher reactivity compared to conventional electrolyte additives. That is, defluorination of C-F bonds with relatively low reactivity can be performed relatively easily for carbon atoms located at the terminal of the alkyl group. The defluorination reaction products thus generated (e.g., fluorine ions, activated compounds before defluorination, etc.) react with lithium ions to form LiF, while being directly inserted into and participating in the SEI layer to realize high ion conductivity and excellent heat resistance of the SEI layer.

The compound represented by Chemical Formula 1, which can impart excellent ion conductivity and heat resistance to the SEI layer during activation as described above, may include one or more among acrylic compounds represented by the following <Structural Formula 1> to <Structural Formula 10>:

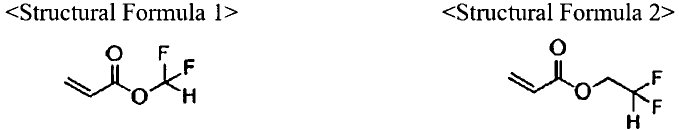

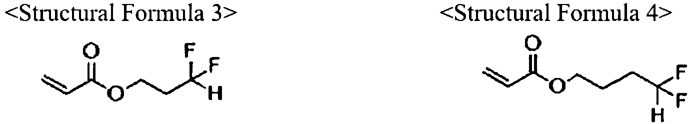

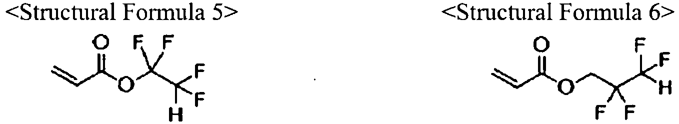

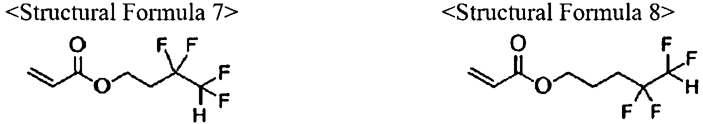

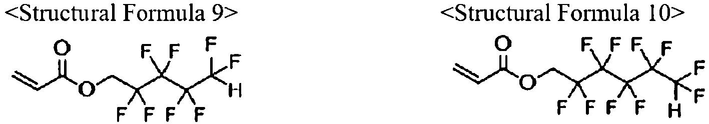

The compounds of <Structural Formula 1> to <Structural Formula 10> contain vinyl groups within acrylate groups and have the characteristic of being easily decomposed during activation of the secondary battery to participate in SEI layer formation. In addition, the compounds have a structure in which terminal carbon of alkyl groups bonded to oxygen atoms of acrylate groups is partially substituted with fluorine elements, thereby enabling uniform formation of an SEI layer with excellent ion conductivity and heat resistance during activation of the secondary battery.

As an example, the electrolyte composition including the compound represented by Chemical Formula 1 may have a temperature at which heat generation of the negative electrode active material begins when exposed to high temperature during differential scanning calorimetry (DSC) analysis, i.e., an onset temperature in a range of 250°C or higher. Specifically, the onset temperature may be in a range of 260°C or higher, 270°C or higher, 250°C to 400°C, 260°C to 380°C, 270°C to 360°C, 285°C to 340°C, more than 280°C and 360°C or less, more than 290°C and 350°C or less, or 300°C to 340°C.

In addition, the compound represented by Chemical Formula 1 may be included in the electrolyte composition in a predetermined content. Specifically, the compound represented by Chemical Formula 1 may be included in a range of more than 0 wt.% and 5 wt.% or less based on the total weight of the electrolyte composition, and more specifically, more than 0 wt.% and 4 wt.% or less; more than 0 wt.% and 3 wt.% or less; more than 0 wt.% and 2 wt.% or less; more than 0 wt.% and 1 wt.% or less; more than 0 wt.% and 0.9 wt.% or less; 0.1 wt.% to 5 wt.%; 0.1 wt.% to 4 wt.%; 0.1 wt.% to 3 wt.%; 0.1 wt.% to 2 wt.%; 0.1 wt.% to 1 wt.%; 0.5 wt.% to 4 wt.%; 1 wt.% to 5 wt.%; 2 wt.% to 4.5 wt.%; 2.5 wt.% to 5 wt.%; 3 wt.% to 5 wt.%; 2 wt.% to 4 wt.%; or 3 wt.% to 4.5 wt.% based on the total weight of the electrolyte composition.

The present disclosure can prevent excessive amounts beyond the above-described range from being used to increase the viscosity of the electrolyte composition, thereby degrading wettability to electrodes and separators, by controlling the total content of the compound represented by Chemical Formula 1 to the above-described range. In addition, the present disclosure can prevent battery performance from deteriorating due to reduced ion conductivity of the electrolyte composition. Furthermore, the present disclosure can prevent the effect of the additive from being minimally realized due to use of a trace amount of the electrolyte additive content beyond the above range.

The electrolyte additive may further include a cyclic carbon compound together with the compound represented by Chemical Formula 1. For example, the cyclic carbon compound may include one or more of vinylene carbonate (VC), 1,3-propane sultone (PS), ethylene sulfate (ESa), propylene sulfate (PSa), or butylene sulfate (BSa).

For example, the cyclic carbon compound may include vinylene carbonate (VC), 1,3-propane sultone (PS), ethylene sulfate (ESa), and/or propylene sulfate (PSa).

The cyclic carbon compound is included in the electrolyte composition together with the compound represented by Chemical Formula 1 to not only increase the initial charge-discharge capacity of the lithium secondary battery, but also suppress decomposition of the non-aqueous organic solvent that occupies most of the electrolyte composition under high temperature conditions, thereby suppressing gas generation while simultaneously improving cycle characteristics of the lithium secondary battery.

Meanwhile, the electrolyte additive may be in a range of more than 0 wt.% and 10 wt.% or less based on the total weight of the electrolyte composition, and specifically may be in a range of more than 0 wt.% and 7.5 wt.% or less, 1 wt.% to 7.5 wt.%, 3 wt.% to 6.5 wt.%, or 4.5 wt.% to 6.5 wt.%.

In addition, when the electrolyte additive includes both the compound represented by Chemical Formula 1 and the cyclic carbon compound, the cyclic carbon compound may be included at a predetermined content ratio with respect to the total electrolyte additive. Specifically, the cyclic carbon compound may be included in a range of 10 parts by weight or more and less than 50 parts by weight based on 100 parts by weight of the total electrolyte additive. For example, the cyclic carbon compound may be included in amounts of 10 parts by weight to 49 parts by weight; 15 parts by weight to 49 parts by weight; 20 parts by weight to 47 parts by weight; 30 parts by weight to 49 parts by weight; 20 parts by weight to 40 parts by weight; 10 parts by weight to 30 parts by weight; or 40 parts by weight to 47 parts by weight based on 100 parts by weight of the total electrolyte additive.

Generally, when the acidity of the electrolyte composition increases, concentration polarization phenomenon may be induced, and the transport rate of lithium ions may be reduced. However, the present disclosure can prevent the acidity of the electrolyte composition from increasing after the activation process due to the high ratio of the compound represented by Chemical Formula 1 by controlling the content ratio of the compound represented by Chemical Formula 1 and the cyclic carbon compound. In addition, the present disclosure can prevent the problem that the heat resistance and thickness uniformity of the SEI layer formed on the negative electrode surface are not sufficiently improved due to the compound represented by Chemical Formula 1 at a ratio lower than the above-described range.

In addition, the electrolyte composition includes a non-aqueous organic solvent, and the non-aqueous organic solvent comprises a fluorine-substituted linear ester solvent as a main component. Specifically, the fluorine-substituted linear ester solvent may include one or more among compounds represented by the following Chemical Formula 2:

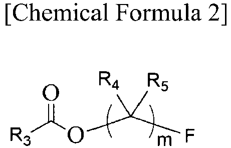

In Chemical Formula 2,
R₃ is hydrogen or a C_{1~6} alkyl group,
R₄ and R₅ are each hydrogen, a fluoro group or a C₁₋₁₀ fluorinated alkylene group, and
m is an integer of 1 to 6.

Specifically, in Chemical Formula 2,
R₃ is a methyl group, ethyl group or propyl group,
R₄ and R₅ are each hydrogen or a fluoro group, and
m is an integer of 2 to 5.

Specifically, the fluorine-substituted linear ester solvent may include one or more among compounds represented by the following <Structural Formula 11> to <Structural Formula 16>:

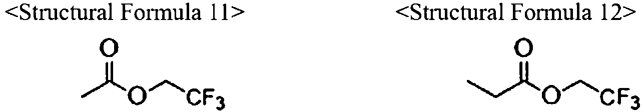

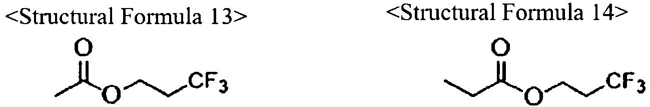

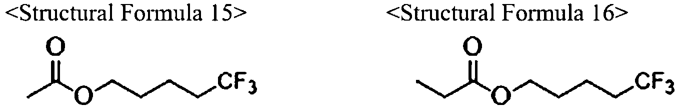

Conventionally, fluorine-substituted non-aqueous carbonate solvents such as fluoroethylene carbonate (FEC) have been applied to electrolytes for lithium secondary batteries to suppress decomposition of electrolyte compositions on positive electrode and/or negative electrode surfaces and enhance high temperature safety. However, such fluorine-based carbonate solvents have problems such as reduced battery capacity or deteriorated cycle characteristics when applied to electrolytes due to their low reduction potential.

In comparison, the fluorine-substituted linear ester solvent exhibits high ion conductivity at low temperature and has low viscosity, resulting in excellent wettability to the electrode assembly. In addition, the fluorine-substituted linear ester solvent has high oxidation reaction potential in a range of 4.5V or higher, and specifically 5.0V or higher, so it is not easily decomposed even when overcharging occurs, thereby having the characteristic of high safety. In addition, the linear ester solvent represented by Chemical Formula 2 can minimize transfer of external heat to the negative electrode active material when the lithium secondary battery is exposed to high temperature, thereby having excellent effect of improving the high temperature safety of the lithium secondary battery.

The fluorine-substituted linear ester solvent may be included in a range of 60 vol.% or more based on the total weight of the non-aqueous organic solvent of the electrolyte composition, and more specifically, 60 vol.% or more and less than 100 vol.%; 70 vol.% or more and less than 100 vol.%; 75 vol.% or more and less than 100 vol.%; 80 vol.% or more and less than 100 vol.%; 85 vol.% or more and less than 100 vol.%; 90 vol.% or more and less than 100 vol.%; 60 vol.% to 99 vol.%, 70 vol.% to 99 vol.%, 80 vol.% to 99 vol.%, 90 vol.% to 99 vol.%, 95 vol.% to 99 vol.%, 60 vol.% to 80 vol.%, or 70 vol.% to 90 vol.%.

The present disclosure can prevent the problem that heat transferred to the negative electrode active material is not sufficiently reduced when the lithium secondary battery is exposed to high temperature when the content of the fluorine-substituted linear ester solvent contained in the non-aqueous organic solvent is included in a range of less than 60 vol.% by controlling the content as described above. In addition, since the fluorine-substituted linear ester solvent has excellent resistance to heat, when the content is controlled to the above range, the electrolyte composition is not easily decomposed at high temperature, and there is an advantage that the amount of heat transferred to the negative electrode active material can be minimized when combined with the predetermined electrolyte additive according to the present disclosure.

Moreover, the non-aqueous organic solvent may further include a carbonate-based solvent together with the fluorine-substituted linear ester solvent. The carbonate-based solvent can control the dielectric constant of the electrolyte composition by performing the role of assisting the fluorine-substituted linear ester solvent, which is the main component of the non-aqueous organic solvent. Through this, high ion conductivity of the electrolyte composition can be secured.

In addition, the carbonate-based solvents can perform the function of preventing gas generation by inducing side reactions of the electrolyte composition when exposed to high temperature. Accordingly, the carbonate-based solvent may be mixed with the fluorine-substituted linear ester solvent in one type from the viewpoint of electrochemical stability against oxidation-reduction and chemical stability regarding reaction with heat or solute, or may be used by mixing two or more types with the fluorine-substituted linear ester solvent in any combination according to the application.

Such carbonate-based solvents may include ethyl methyl carbonate (EMC), dimethyl carbonate (DMC), diethyl carbonate (DEC), ethylene carbonate (EC), propylene carbonate (PC), butylene carbonate (BC), etc., and these may be used alone or two or more types may be used in combination.

In addition, the auxiliary solvent can be mixed to satisfy a constant volume ratio when mixed with the fluorine-substituted linear ester solvent in order to control the dielectric constant of the electrolyte composition without reducing the solubility of the compound represented by Chemical Formula 1, which is an electrolyte additive. Specifically, the auxiliary solvent may be included in a range of 40 vol.% or less based on the total volume of the non-aqueous organic solvent, and more specifically, more than 0 vol.% and 40 vol.% or less; more than 0 vol.% and 30 vol.% or less; more than 0 vol.% and 25 vol.% or less; more than 0 vol.% and 20 vol.% or less; more than 0 vol.% and 15 vol.% or less; more than 0 vol.% and 10 vol.% or less; 1 vol.% to 40 vol.%; 1 vol.% to 30 vol.%; 1 vol.% to 20 vol.%; 1 vol.% to 10 vol.%; 1 vol.% to 5 vol.%; 20 vol.% to 40 vol.%; or 10 vol.% to 30 vol.% based on the total volume of the non-aqueous organic solvent.

The present disclosure can maintain high compatibility between the fluorine-substituted linear ester solvent and the auxiliary solvent by controlling the content of the auxiliary solvent in the total non-aqueous organic solvent to the above ratio, and simultaneously improve battery performance by increasing charge mobility and/or ion mobility of the battery.

Moreover, the electrolyte composition may include a specific lithium salt to reduce the amount of heat transferred to the positive electrode active material. Specifically, the lithium salt includes Li⁺ as a cation, and may include one or more of the following anions: BF₄⁻, B₁₀Cl₁₀⁻, ClO₄⁻, AlO₂⁻, AlCl₄⁻, PF₆⁻, SbF₆⁻, AsF₆⁻, BF₂C₂O₄⁻, B(C₂O₄)₂⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, (C₂O₄)₂PF₂⁻,CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or ((C(CN))₂NC(CF₃))N⁻.

The lithium salt basically imparts conductivity to the organic solvent constituting the electrolyte, while performing the role of inducing passivation of the negative electrode through SEI formation. **In** the present disclosure, the lithium salt can perform the function of delaying side reactions between lithium ions deintercalated from the negative electrode and the electrolyte composition when the lithium secondary battery is exposed to high temperature by being dissolved in the linear ester solvent.

Meanwhile, the lithium salt applied in the present disclosure may optionally include two or more of the above-described lithium salts.

For example, the lithium salt may include lithium hexafluorophosphate (hereinafter, LiPF₆) and lithium bis(trifluoromethanesulfonyl)imide (anion: (CF₃SO₂)₂N⁻, hereinafter, LiFSI).

LiPF₆, which shows PF₆⁻ as an anion upon dissociation, is a phosphate-based lithium salt commonly applied to electrolyte compositions of lithium secondary batteries, and has the characteristic of imparting high conductivity to carbonate-based electrolytes. However, when LiPF₆ is applied as a lithium salt alone, it decomposes to PF₅ at about 200°C or higher when exposed to high temperature. This is very unstable and removes the CEI (Cathode Electrolyte Interphase) layer located on the surface of the positive electrode active layer, thereby causing the problem of degrading the high temperature durability of the electrode.

**In** addition, LiFSI, which is one of the sulfonimide-based lithium salts, has high decomposition temperature in carbonate-based solvents, resulting in high high-temperature safety and high water resistance, so the amount of hydrogen fluoride (HF) generation is not high even when in contact with moisture. However, the sulfonyl imide group itself of LiFSI has remarkably high reactivity with aluminum, causing corrosion of the positive electrode current collector when applied to electrolyte compositions, and especially when the inorganic additive of the present disclosure is excluded, the heat flow rate that transfers heat to the negative electrode active material is high, so there is a limitation that it is difficult to apply to electrolyte compositions.

When such LiPF₆ and LiFSI are applied together, they not only have the effect of remarkably improving the low high-temperature safety of LiPF₆, but also can realize the effect of remarkably reducing the heat flow rate at which the electrolyte composition transfers heat to the negative electrode active material.

In this case, when the phosphate-based lithium salt called a first lithium salt among the lithium salts used in combination the sulfonylimide-based lithium salt called a second lithium salt, the first lithium salt and the second lithium salt may have a predetermined mixing ratio. Specifically, the mixing ratio of the first lithium salt and the second lithium salt may be 1:0.1~1.0 based on molar concentration (M), and specifically may be 1:0.4~0.9 or 1:0.6~0.8. The present disclosure can maximize the effect of lowering the heat flow rate of the electrolyte composition while minimizing the disadvantages of each lithium salt by controlling the ratio of the first lithium salt and the second lithium salt as described above.

The concentration of these lithium salts can satisfy a predetermined concentration to enhance the high temperature safety effect while maintaining the inherent function of the lithium salt. For example, the preferred concentration of the lithium salt may have a lower limit of 0.5 mol/L or more, specifically 0.7 mol/L or more, more specifically 0.9 mol/L or more; and an upper limit of 2.5 mol/L or less, specifically 2.0 mol/L or less, more specifically 1.5 mol/L or less. If the concentration of the lithium salt is below 0.5 mol/L, ion conductivity is reduced, so there is a concern that the cycle characteristics and output characteristics of the non-aqueous electrolyte battery may be degraded. In addition, if the concentration of the lithium salt exceeds 2.5 mol/L, the viscosity of the electrolyte for non-aqueous electrolyte batteries increases, so there is also a concern that ion conductivity may be reduced, and the cycle characteristics and output characteristics of the non-aqueous electrolyte battery may be degraded.

In addition, when a large amount of lithium salt is dissolved in the non-aqueous organic solvent at once, the liquid temperature may rise due to the heat of dissolution of the lithium salt. When the temperature of the non-aqueous organic solvent rises remarkably due to the heat of dissolution of the lithium salt as described above, in the case of fluorine-containing lithium salts, decomposition may be promoted and hydrogen fluoride (HF) may be generated. Hydrogen fluoride (HF) is undesirable because it causes deterioration of battery performance. Therefore, the temperature when dissolving the lithium salt in the non-aqueous organic solvent is not particularly limited, but may be controlled to -20°C to 80°C, and specifically may be controlled to 0°C to 60°C.

The electrolyte composition according to the present disclosure can uniformly form a solid electrolyte interface layer (SEI layer) on the negative electrode surface during activation of the lithium secondary battery by having the above-described composition, thereby minimizing side reactions between lithium ions generated on the negative electrode surface and the electrolyte composition to improve the high temperature safety of the lithium secondary battery.

As an example, the electrolyte composition may exhibit a heat flow rate of 30.0 W/g or less within a temperature range of 250°C to 400°C when measuring heat flow rate for a mixture comprising a negative electrode active material at 100% state of charge and the electrolyte composition in a weight ratio of 1:0.5. For example, the heat flow may exhibit in a range of 5 W/g to 25 W/g; 5 W/g to 20 W/g; 10 W/g to 25 W/g; 15 W/g to 25 W/g; 17 W/g to 23 W/g; or 19 W/g to 22 W/g within the temperature range of 250°C to 400°C during the heat flow rate measurement.

Here, the negative electrode active material may be a silicon-based negative electrode active material commonly applied as a negative electrode active material of lithium secondary batteries. Specifically, the silicon-based negative electrode active material may include one or more of silicon (Si), silicon carbide (SiC) or silicon oxide (SiOᵣ, where 0.8≤r≤2.5).

For example, the silicon-based negative electrode active material may include silicon carbide (SiC). The silicon carbide may mean silicon carbide in which carbon atoms and silicon atoms are chemically bonded at an atomic ratio of 1:1. In some cases, it may be formed by forming a carbon layer on the surface of pure silicon (pure Si); or it may be a composite formed by mixing pure silicon (pure Si) and graphite at a 1:1 molar ratio. The silicon carbide (SiC) contains carbon atoms and has the advantage of excellent performance in terms of lifespan and output due to relatively low volume expansion rate and high conductivity during charging and discharging of secondary batteries compared to pure silicon (pure Si) or silicon oxide (SiOᵣ).

The "heat flow rate" means the amount of heat flowing per unit weight, and can particularly indicate the degree of heat generation of secondary batteries. As a result of analyzing the electrolyte composition of the present disclosure using thermal analysis, the electrolyte composition showed a lower heat flow rate compared to conventional electrolyte compositions. Here, the thermal analysis simulates the deterioration phenomenon in which the performance of the secondary battery deteriorates while spontaneously generating heat due to exposure to high temperature or external mechanical factors, and the heat flow rate measured in this case indicates the degree of heat (e.g., heat amount) generated by high temperature reaction between the electrolyte composition and the charged negative electrode active material when simulating the high temperature deterioration phenomenon of the secondary battery. The heat flow rate can be increased or decreased depending on the type or content ratio of each component constituting the electrolyte composition, and can be increased or decreased depending on whether an SEI layer containing lithium ions is formed on the surface of the negative electrode active layer. The reduction of such heat flow rate means that the amount of heat generated between the negative electrode active material and the electrolyte composition is reduced. That is, it means that the degree to which lithium ions that were intercalated into the negative electrode active material react with the electrolyte composition is reduced, and accordingly the heat generated is reduced. This result indicates that the reactivity of the electrolyte composition with lithium ions in the negative electrode active material is lowered under high temperature conditions, and accordingly the thermal safety of the lithium secondary battery is improved.

### Lithium Secondary Battery

Further, the present disclosure provides a lithium secondary battery comprising
an electrode assembly including a positive electrode, a negative electrode and a separator provided between the positive electrode and the negative electrode; and
the electrolyte composition according to the present disclosure described above, impregnated in the electrode assembly.

The lithium secondary battery according to the present disclosure includes an electrode assembly having a structure in which a separator is disposed between a plurality of positive electrodes and a plurality of negative electrodes that are alternately stacked, and an electrolyte composition in which the electrode assembly is impregnated.

The electrolyte composition can uniformly form a solid electrolyte interface layer (SEI layer) with high lithium ion conductivity and excellent heat resistance on the negative electrode surface during activation of the lithium secondary battery.

Therefore, the lithium secondary battery including the same has significantly reduced reactivity between the negative electrode active material (specifically, lithium ions intercalated into the negative electrode active material) and the electrolyte composition, so the temperature at which heat generation begins between them (i.e., heat onset temperature) increases, thereby suppressing heat generation due to negative electrode deterioration and the like. In addition, there is an advantage of excellent high temperature safety since side reactions of the electrolyte composition occurring on the negative electrode surface when the lithium secondary battery including the electrolyte composition is exposed to high temperature can be minimized.

The lithium secondary battery includes an electrode assembly and an electrolyte composition in which the electrode assembly is impregnated. Here, since the electrolyte composition has the same configuration as described above, detailed description thereof is omitted.

Hereinafter, each component of the electrode assembly will be described in detail.

The electrode assembly includes a positive electrode, a negative electrode and a separator interposed between the positive electrode and the negative electrode.

Here, the positive electrode includes a positive electrode active layer provided on at least one surface of a positive electrode current collector. The positive electrode active layer is a material that can implement electrical activity by causing electrochemical reactions on the positive electrode current collector, and comprises as a main component a lithium metal oxide represented by Chemical Formula 3 capable of reversible intercalation and deintercalation of lithium ions:

[Chemical Formula 3] Liₓ[Ni_{y}Co_{z}Mn_{w}M¹ᵥ]O₂

In Chemical Formula 3,
M¹ is one or more elements among W, Cu, Fe, V, Cr, Ti, Zr, Zn, Al, In, Ta, Y, La, Sr, Ga, Sc, Gd, Sm, Ca, Ce, Nb, Mg, B, or Mo,
x, y, z, w and v are each 0.9≤x≤1.30, 0.6≤y<1, 0<z≤0.2, 0<w≤0.2, 0≤v≤0.1, provided that y+z+w+v=1.

The lithium metal oxide represented by Chemical Formula 3 is an oxide in which lithium (Li) and transition metals nickel (Ni), cobalt (Co) and manganese (Mn) are mixed, and is characterized in that the content of nickel (Ni) is 60% or more (i.e., 60 mol% or more) of the total molar fraction of transition metals.

The three-component NCM-based positive electrode active material having nickel (Ni), cobalt (Co), and manganese (Mn) as main components have the advantages of high capacity of LiNiO₂ (LNO), excellent electrochemical performance of LiCoO₂ (LCO), and stability of LiMn₂O₄ (LMO).

Such positive electrode active materials include one or more of LiNi_{0.95}Co_{0.03}Mn_{0.02}O₂, LiNi_{0.9}Co_{0.05}Mn_{0.05}O₂, LiNi_{0.9}Co_{0.06}Mn_{0.04}O₂, LiNi_{0.9}Co_{0.05}Mn_{0.05}O₂, LiNi_{0.85}Co_{0.1}Mn_{0.05}O₂, LiNi_{0.85}Co_{0.05}Mn_{0.1}O₂, LiNi_{0.8}Co_{0.1}Mn_{0.1}O₂, LiNi_{0.75}Co_{0.1}Mn_{0.15}O₂, LiNi_{0.7}Co_{0.2}Mn_{0.1}O₂, LiNi_{0.7}Co_{0.15}Mn_{0.15}O₂, LiNi_{0.7}Co_{0.1}Mn_{0.2}O₂, LiNi_{0.7}Co_{0.2}Mn_{0.1}O₂, LiNi_{0.6}Co_{0.2}Mn_{0.2}O₂, LiNi_{0.6}Co_{0.2}Mn_{0.1}Al_{0.1}O₂, LiNi_{0.6}Co_{0.2}Mn_{0.15}Al_{0.05}O₂, or LiNi_{0.7}Co_{0.1}Mn_{0.1}Al_{0.1}O₂

In addition, the positive electrode active material may be included in a range of 85 parts by weight or more based on 100 parts by weight of the total positive electrode active layer. Specifically, the positive electrode active material may be included in a range of 90 parts by weight or more, 93 parts by weight or more, or 95 parts by weight or more based on 100 parts by weight of the total positive electrode active layer.

Moreover, the positive electrode active layer may further include a conductive material, a binder, other additives, etc. together with the positive electrode active material as needed.

In this case, the conductive material is used to improve the electrical performance of the positive electrode, and those commonly used in the art may be applied. Specifically, it may include one or more of graphite materials such as natural graphite and artificial graphite; carbon black such as acetylene black, Denka black, Ketjen black, super-P, channel black, furnace black, lamp black, and thermal black; graphene; or carbon nanotubes.

Moreover, the conductive material may be included in an amount of 0.1 parts by weight to 5 parts by weight based on 100 parts by weight of the total positive electrode active layer. Specifically, the conductive material may be included in an amount of 0.1 parts by weight to 4 parts by weight; 2 parts by weight to 4 parts by weight; 1.5 parts by weight to 5 parts by weight; 0.5 parts by weight to 3.5 parts by weight; 1 part by weight to 3 parts by weight; 0.1 parts by weight to 2.5 parts by weight; 0.1 parts by weight to 2 parts by weight; or 0.1 parts by weight to 1 part by weight based on 100 parts by weight of the total positive electrode active layer.

In addition, the binder serves to bind the positive electrode active material, positive electrode additive and conductive material to each other, and any binder having such function may be used without particular limitation. Specifically, the binder may include one or more resins selected from polyvinylidene fluoride-hexafluoropropylene copolymer (PVdF-co-HFP), polyvinylidene fluoride (PVdF), polyacrylonitrile, polymethylmethacrylate or copolymers thereof. For example, the binder may include polyvinylidene fluoride (PVdF).

Moreover, the binder may be included in an amount of 0.1 parts by weight to 5 parts by weight based on 100 parts by weight of the total positive electrode active layer. Specifically, the binder may be included in amounts of 0.1 parts by weight to 4 parts by weight; 2 parts by weight to 4 parts by weight; 1.5 parts by weight to 5 parts by weight; 0.5 parts by weight to 3.5 parts by weight; 1 part by weight to 3 parts by weight; 0.1 parts by weight to 2.5 parts by weight; 0.1 parts by weight to 2 parts by weight; or 0.1 parts by weight to 1 part by weight based on 100 parts by weight of the total positive electrode active layer.

The total thickness of the positive electrode active layer is not particularly limited, but may specifically be 50*µ*m to 300*µ*m. More specifically, the total thickness of the positive electrode active layer may be 100*µ*m to 200*µ*m; 80*µ*m to 150*µ*m; 120*µ*m to 170*µ*m; 150*µ*m to 300*µ*m; 200*µ*m to 300,um; or 150*µ*m to 190*µ*m.

In addition, the positive electrode may use a positive electrode current collector having high conductivity without causing chemical changes in the battery. For example, stainless steel, aluminum, nickel, titanium, calcined carbon, etc. may be used, and in the case of aluminum or stainless steel, those surface-treated with carbon, nickel, titanium, silver, etc. may also be used. Moreover, the average thickness of the current collector may be appropriately applied in the range of 3*µ*m to 500*µ*m considering the conductivity and total thickness of the positive electrode to be manufactured.

Furthermore, the negative electrode, like the positive electrode, comprises a negative electrode active layer including a negative electrode active material on at least one surface of a negative electrode current collector.

The negative electrode active layer includes a silicon-based negative electrode active material as a negative electrode active material to implement electrical activity through reversible oxidation-reduction reactions during charging and discharging of the battery.

The silicon-based negative electrode active material refers to a material having silicon atoms as a main component. The silicon-based negative electrode active material can reversibly adsorb and release a large amount of lithium during charging and discharging of the secondary battery, and has the characteristic of a large theoretical maximum capacity of about 4020 mAh/g (9800 mAh/cc, specific gravity 2.23). Therefore, it has the advantage of achieving high energy density and/or high capacity of the negative electrode.

Such silicon-based negative electrode active materials may include one or more of silicon (Si), silicon carbide (SiC) or silicon oxide (SiOᵣ, where 0.8≤r≤2.5).

For example, the silicon-based negative electrode active material may include silicon carbide (SiC). The silicon carbide may mean silicon carbide in which carbon atoms and silicon atoms are chemically bonded at an atomic ratio of 1:1. In some cases, it may be formed by forming a carbon layer on the surface of pure silicon (pure Si); or it may be a composite formed by mixing pure silicon (pure Si) and graphite at a 1:1 molar ratio. The silicon carbide (SiC) contains carbon atoms and has the advantage of excellent performance in terms of lifespan and output due to relatively low volume expansion rate and high conductivity during charging and discharging of secondary batteries compared to pure silicon (pure Si) or silicon oxide (SiOᵣ).

In addition, the silicon-based negative electrode active material may be included to be 85 parts by weight or more based on 100 parts by weight of the total negative electrode active layer, and specifically may be included to be 90 parts by weight or more, 93 parts by weight or more, or 95 parts by weight or more.

Meanwhile, the negative electrode active layer according to the present disclosure may optionally further include a conductive material, a binder, other additives, etc. together with the silicon-based negative electrode active material as a main component, as needed.

The conductive material may include one or more of carbon black such as acetylene black and Ketjen black; carbon nanotubes; carbon fibers, etc., but is not limited thereto.

For example, the negative electrode active layer may contain carbon black, carbon nanotubes, carbon fibers, etc. alone or in combination as a conductive material.

In this case, the content of the conductive material may be 0.1 parts by weight to 10 parts by weight based on 100 parts by weight of the total negative electrode active layer, and specifically may be 0.1 parts by weight to 8 parts by weight, 0.1 parts by weight to 5 parts by weight, 0.1 parts by weight to 3 parts by weight, 2 parts by weight to 6 parts by weight, or 0.5 parts by weight to 2 parts by weight. The present disclosure can prevent the resistance of the negative electrode from increasing due to a low content of conductive material, thereby reducing charge capacity, and can prevent problems such as reduced charge capacity due to reduced content of negative electrode active material caused by excessive conductive material or deteriorated rapid charging characteristics due to increased loading amount of the negative electrode active layer, by controlling the content of the conductive material to the above range.

Moreover, the binder is a component that assists in bonding the silicon-based negative electrode active material and conductive material and bonding to the current collector, and may be appropriately applied within a range that does not deteriorate the electrical properties of the electrode. Specifically, the binder may include any one or more selected from polyvinylidene fluoride-hexafluoropropylene copolymer (PVDF-co-HFP), polyvinylidene fluoride (PVdF), polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR) or fluorine rubber.

The content of the binder may be 0.1 parts by weight to 10 parts by weight based on 100 parts by weight of the total negative electrode active layer, and specifically may be 0.1 parts by weight to 8 parts by weight, 0.1 parts by weight to 5 parts by weight, 0.1 parts by weight to 3 parts by weight, or 2 parts by weight to 6 parts by weight. The present disclosure can prevent deterioration of adhesive strength of the active layer due to low content of binder or deterioration of electrical properties of the electrode due to excessive binder, by controlling the content of the binder contained in the negative electrode active layer to the above range.

Furthermore, the average thickness of the negative electrode active layer may be 100*µ*m to 300*µ*m, and specifically may be 100*µ*m to 250*µ*m; or 130*µ*m to 190*µ*m. The present disclosure can improve energy density by controlling the average thickness of the negative electrode active layer to the above range.

In addition, the negative electrode current collector is not particularly limited as long as it has high conductivity without causing chemical changes in the battery, and for example, copper, stainless steel, nickel, titanium, calcined carbon, etc. may be used, and in the case of copper or stainless steel, those surface-treated with carbon, nickel, titanium, silver, etc. may also be used. In addition, the average thickness of the negative electrode current collector may be appropriately applied in the range of 1*µ*m to 500*µ*m considering the conductivity and total thickness of the negative electrode to be manufactured.

Meanwhile, the separator interposed between the positive electrode and negative electrode of each unit cell is an insulating thin film having high ion permeability and mechanical strength, and is not particularly limited as long as it is commonly used in the art, but specifically may include one or more polymers among chemical-resistant and hydrophobic polypropylene; polyethylene; or polyethylene-propylene copolymer. The separator may have the form of a porous polymer substrate such as a sheet or nonwoven fabric including the above-described polymer, and in some cases, may have the form of a composite separator in which organic or inorganic particles are coated by an organic binder on the porous polymer substrate. Moreover, the separator may have an average pore diameter of 0.01*µ*m to 10*µ*m and an average thickness of 5*µ*m to 300*µ*m.

Furthermore, the lithium secondary battery according to the present disclosure is not particularly limited, but may be applied in various forms such as cylindrical type, prismatic type, pouch type, or coin type depending on the purpose of use. The lithium secondary battery according to an embodiment of the present disclosure may be a pouch type secondary battery.

Hereinafter, the present disclosure will be described in more detail by examples and experimental examples.

However, the following examples and experimental examples are merely illustrative of the present disclosure, and the content of the present disclosure is not limited to the following examples and experimental examples.

### Examples 1 to 7 and Comparative Examples 1 to 7. Preparation of electrolyte composition for lithium secondary battery

As non-aqueous organic solvents, linear ester solvents represented by <Structural Formula 11> and <Structural Formula 13> and ethylene carbonate (EC), ethyl methyl carbonate (EMC) and fluoroethylene carbonate (FEC) were respectively prepared, and LiPF₆ was prepared as a lithium salt.

In addition, as compounds represented by Chemical Formula 1 which are electrolyte additives, compounds represented by <Structural Formula 6> and <Structural Formula 10> were respectively prepared, and compounds represented by <Structural Formula 17> and <Structural Formula 18> were separately prepared as comparison groups for the compounds.

Moreover, LiBOB, LiODFB, LiDFOP, vinylene carbonate (VC), 1,3-propane sultone (PS), ethylene sulfate (ESa) and fluoroethylene carbonate (FEC) were prepared as additional electrolyte additives.

The prepared LiPF₆ was added to the non-aqueous organic solvent at 30°C to 40°C to satisfy 1 molar concentration (M), and electrolyte additives were added to prepare electrolyte compositions.

In this case, the types and contents of non-aqueous organic solvents used in the electrolyte compositions were controlled as shown in Table 1, and the types and contents of electrolyte additives are as shown in Table 2. Here, the content of each component of the non-aqueous organic solvent was controlled in volume percentage (i.e., vol.%) based on the total volume of the non-aqueous organic solvent. In addition, the compound represented by Chemical Formula 1 included in the electrolyte additive and the additional electrolyte additives were controlled in weight percentage (wt.%) based on the total weight of the electrolyte composition.

**[Table 1]**

| | Electrolyte Additive | | Additional Electrolyte Additive | |
|---|---|---|---|---|
| | Type | Content [Based on electrolyte composition weight] | Type | Content [Based on electrolyte composition weight] |
| Example 1 | 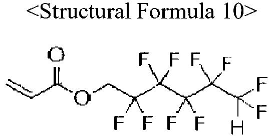 | 1 wt.% | VC:PS:Esa | 1:0.5:1 wt.% |
| Example 2 | | 3 wt.% | VC:PS:Esa | 1:0.5:1 wt.% |
| Example 3 | | 5 wt.% | VC:PS:Esa | 1:0.5:1 wt.% |
| Example 4 | 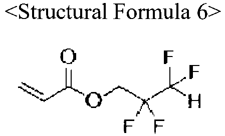 | 3 wt.% | VC:PS:Esa | 1:0.5:1 wt.% |
| Example 5 | 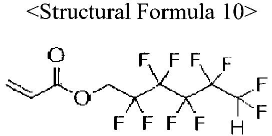 | 3 wt.% | - | - |
| Example 6 | | 3 wt.% | VC:PS:Esa | 1:0.5:1 wt.% |
| Example 7 | | 3 wt.% | VC:PS:Esa | 1:0.5:1 wt.% |
| Comparative Example 1 | | 3 wt.% | VC:PS:Esa | 1:0.5:1 wt.% |
| Comparative Example 2 | | 3 wt.% | VC:PS:Esa | 1:0.5:1 wt.% |
| Comparative Example 3 | | 3 wt.% | VC:PS:Esa | 1:0.5:1 wt.% |
| Comparative Example 4 | - | - | VC:PS:Esa | 1:0.5:1 wt.% |
| Comparative Example 5 | - | - | VC:PS:Esa | 1:0.5:1 wt.% |
| Comparative Example 6 | 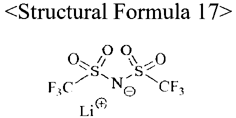 | - | VC:PS:Esa | 1:0.5:1 wt.% |
| Comparative Example 7 | 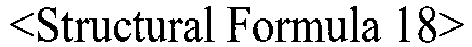 | - | VC:PS:Esa | 1:0.5:1 wt.% |
| | 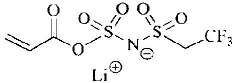 | | | |

**[Table 2]**

| | Non-aqueous Organic Solvent | | | |
|---|---|---|---|---|
| | Linear Ester Solvent | Content | Carbonate-based Solvent | Content |
| Example 1 | 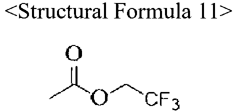 | 90 vol.% | FEC | 10 vol.% |
| Example 2 | | 90 vol.% | FEC | 10 vol.% |
| Example 3 | | 90 vol.% | FEC | 10 vol.% |
| Example 4 | | 90 vol.% | FEC | 10 vol.% |
| Example 5 | | 90 vol.% | FEC | 10 vol.% |
| Example 6 | | 60 vol.% | FEC | 40 vol.% |
| Example 7 | 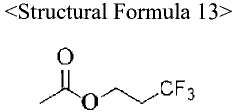 | 90 vol.% | FEC | 10 vol.% |
| Comparative Example 1 | 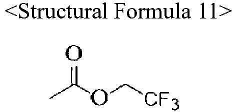 | 40 vol.% | FEC | 60 vol.% |
| Comparative Example 2 | - | - | EC:EMC | 70:30 vol.% |
| Comparative Example 3 | - | - | EC:FEC | 30:70 vol.% |
| Comparative Example 4 | - | - | EC:EMC | 70:30 vol.% |
| Comparative Example 5 | 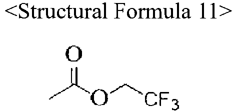 | 90 vol.% | FEC | 10 vol.% |
| Comparative Example 6 | | 90 vol.% | FEC | 10 vol.% |
| Comparative Example 7 | | 90 vol.% | FEC | 10 vol.% |

### Examples 8 to 14 and Comparative Examples 8 to 14. Preparation of lithium secondary battery

LiNi_{0.86}Co_{0.05}Mn_{0.07}Al_{0.02}O₂ with a particle size of 5*µ*m was prepared as a positive electrode active material, and mixed with a carbon-based conductive material and polyvinylidene fluoride as a binder in N-methyl pyrrolidone (NMP) at a weight ratio of 94:3:3 to prepare a positive electrode slurry with 45% solid content. The prepared positive electrode slurry was cast on an aluminum foil. After drying in a vacuum oven at 120°C and then rolling, a positive electrode having a positive electrode active layer with a thickness of 160*µ*m was prepared.

Separately, silicon carbide (SiC, average particle size: about 3±0.5*µ*m) was prepared as a silicon-based negative electrode active material. 97 parts by weight of the prepared silicon-based negative electrode active material and 3 parts by weight of styrene butadiene rubber (SBR) were mixed with water to prepare a negative electrode slurry with 40% solid content. The negative electrode slurry was cast on a copper foil, dried in a vacuum oven at 130°C, and then rolled to prepare a negative electrode having a negative electrode active layer with a thickness of 180*µ*m.

A separator made of polypropylene with a thickness of 18*µ*m was interposed between the obtained positive electrode and negative electrode, inserted into a case, and then the electrolyte compositions prepared in Examples 1 to 7 and Comparative Examples 1 to 7 as shown in Table 3 below were injected to assemble lithium secondary batteries.

Each assembled lithium secondary battery was subjected to initial charging. Specifically, the lithium secondary batteries were initially charged at 55±2°C to a charge cutoff voltage of 4.2V to prepare activated lithium secondary batteries.

**[Table 3]**

| Type of Prepared Lithium Secondary Battery | Type of Used Electrolyte Composition |
|---|---|
| Example 8 | Electrolyte composition of Example 1 |
| Example 9 | Electrolyte composition of Example 2 |
| Example 10 | Electrolyte composition of Example 3 |
| Example 11 | Electrolyte composition of Example 4 |
| Example 12 | Electrolyte composition of Example 5 |
| Example 13 | Electrolyte composition of Example 6 |
| Example 14 | Electrolyte composition of Example 7 |
| Comparative Example 8 | Electrolyte composition of Comparative Example 1 |
| Comparative Example 9 | Electrolyte composition of Comparative Example 2 |
| Comparative Example 10 | Electrolyte composition of Comparative Example 3 |
| Comparative Example 11 | Electrolyte composition of Comparative Example 4 |
| Comparative Example 12 | Electrolyte composition of Comparative Example 5 |
| Comparative Example 13 | Electrolyte composition of Comparative Example 6 |
| Comparative Example 14 | Electrolyte composition of Comparative Example 7 |

### Experimental Example.

To evaluate the high temperature safety of the electrolyte composition for lithium secondary batteries according to the present disclosure and lithium secondary batteries including the same, the following experiments were performed.

### 1) Measurement of heat onset temperature and heat flow rate between negative electrode active material and electrolyte composition

Each of the lithium secondary batteries prepared in Examples 8 to 14 and Comparative Examples 8 to 14 was fully charged (SOC 100%) under CC-CV conditions to 4.25V at a rate of 0.5C at 25°C, and the fully charged lithium secondary batteries were disassembled. In the disassembled lithium secondary batteries, silicon carbide (SiC) as the negative electrode active material and the electrolyte composition were weighed and mixed at a weight ratio of 1:0.5.

The prepared mixture was injected into a sample can of a differential scanning calorimeter (DSC) to prepare a sample, and the heat onset temperature and heat flow rate for the prepared sample were measured. In this case, the sample was measured for temperature change and heat flow rate in a range of 100°C to 500°C while raising the temperature at a heating rate of 10±0.1°C/min.

From the measured results, the heat flow rate between the negative electrode active material and electrolyte composition included in each lithium secondary battery was evaluated, and when there were two or more effective heat flow rate peaks within the temperature range of 100°C to 500°C among the measured results, the value of the peak showing the largest heat flow rate was determined as the corresponding heat flow rate. The results are shown in Table 4 below and FIG. 1.

### 2) Thermal runaway test evaluation

The lithium secondary batteries prepared in Examples 8 to 14 and Comparative Examples 8 to 14 were each charged under constant current (CC) conditions maintained at 1.25A until reaching 4.2V at 25°C, and 4.2V was maintained. When charging was completed, they were discharged under constant current (CC) conditions maintained at 1.25A to 2.85V for activation. Thereafter, each activated lithium secondary battery was rested for 6 hours at 25°C.

Then, they were fully charged (SOC 100%) under constant current (CC) conditions maintained at 1.25A until reaching 4.2V at 25°C, and thermal runaway tests were conducted using accelerating rate calorimetry (ARC). In this case, the accelerating rate calorimetry (ARC) used was a product from THT (Thermal Hazard Technology), and thermal runaway tests were performed by the heat-wait-search (HWS) method. The heat-wait-search (HWS) method heated each lithium secondary battery mounted in an adiabatic oven chamber to 190°C by raising the temperature by 5°C at a rate of 10°C/min from 50°C and waiting for 10 minutes. Here, when each lithium secondary battery showed a temperature change of 0.02°C/min or more during the 10-minute wait after temperature increase, it was recognized that self-heating corresponding to thermal runaway (TR) was proceeding, and from then on, no additional thermal energy was applied to allow the temperature to change by self-heating of each secondary battery. After self-heating of the secondary battery, the self-heating profile of the secondary battery was measured, and the maximum temperature of the secondary battery was calculated from the measured self-heating profile. The results are shown in Table 4 below.

**[Table 4]**

| Type of Electrolyte Composition | DSC Analysis of Lithium Secondary Battery | | Maximum Temperature in Thermal Runaway Test |
|---|---|---|---|
| | Heat Onset Temperature | Heat Flow Rate | |
| Example 1 | 305~330°C | About 7.1±0.5 W/g | 355.1°C |
| Example 2 | 305~330°C | About 6.2±0.5 W/g | 340.3°C |
| Example 3 | 305~330°C | About 6.8±0.5 W/g | 351.3°C |
| Example 4 | 290~315°C | About 7.4±0.5 W/g | 348.5°C |
| Example 5 | 275~295°C | About 7.9±0.5 W/g | 317.9°C |
| Example 6 | 255~275°C | About 10.3±0.5 W/g | 399.5°C |
| Example 7 | 295~310°C | About 7.2±0.5 W/g | 350.2°C |
| Comparative Example 1 | 220~240°C | About 22.6±0.5 W/g | 420.1°C |
| Comparative Example 2 | 190~205°C | About 117.4±0.5 W/g | 663.5°C |
| Comparative Example 3 | 195~210°C | About 90±0.5 W/g | 510.5°C |
| Comparative Example 4 | 170~180°C | About 138±0.5 W/g | 891.7°C |
| Comparative Example 5 | 250~270°C | About 87±0.5 W/g | 521.0°C |
| Comparative Example 6 | 215~235°C | About 38±0.5 W/g | 442.5°C |
| Comparative Example 7 | 225~245°C | About 30±0.5 W/g | 451.3°C |

It can be seen that the electrolyte composition for lithium secondary batteries according to the present disclosure and lithium secondary batteries including the same have excellent high temperature safety.

Specifically, the electrolyte compositions of the examples showed high heat onset temperatures at which heat generation begins due to reactions between the negative electrode active material and electrolyte composition when exposed to high temperature in a range of 255°C or higher, and more specifically 275°C or higher. Moreover, the electrolyte compositions of the examples showed low heat flow rates in a range of about 15 W/g or less, and lithium secondary batteries including the electrolyte compositions showed low maximum temperatures in a range of 400°C or less during thermal runaway tests.

This means that the electrolyte compositions prepared in the examples effectively suppress reactions between the negative electrode active material and electrolyte composition when exposed to high temperature, thereby improving heat generation due to reactions between the negative electrode active material and electrolyte composition.

From these results, it can be seen that the electrolyte composition for lithium secondary batteries according to the present disclosure not only has excellent electrical performance, but also has an excellent effect of improving safety problems caused by negative electrode active materials at high temperature by controlling the heat flow rate between the negative electrode active material and electrolyte composition to a low predetermined range.

While the present disclosure has been described with reference to preferred embodiments of the present disclosure, it will be understood by those skilled in the art that various modifications and variations can be made therein without departing from the scope of the present disclosure as defined by the appended claims.

Therefore, the scope of the present disclosure should not be limited by the detailed description of the specification but should be determined by the appended claims.

## Claims

1. An electrolyte composition for a lithium secondary battery, the electrolyte composition comprising:
a lithium salt, an electrolyte additive and a non-aqueous organic solvent,
wherein the non-aqueous organic solvent comprises a fluorine-substituted linear ester solvent in an amount of 60 vol.% or more to less than 100 vol.% based on a total volume of the non-aqueous organic solvent, and
wherein a heat flow rate of 50.0 W/g or less is exhibited within a temperature range of 250°C to 400°C when measuring heat flow rate for a mixture comprising a negative electrode active material at 100% state of charge and the electrolyte composition in a weight ratio of 1:0.5.

2. The electrolyte composition for the lithium secondary battery of claim 1, wherein the heat flow rate is 0.5 W/g to 30 W/g.

3. The electrolyte composition for the lithium secondary battery of claim 1, wherein the electrolyte additive comprises a compound represented by Chemical Formula 1: 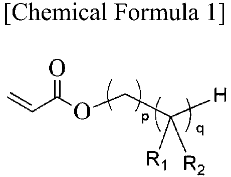 in Chemical Formula 1,
R₁ and R₂ are each independently a fluoro or a C₁₋₁₀ fluorinated alkylene,
p is an integer of 0 to 4, and
q is an integer of 1 to 10.

4. The electrolyte composition for the lithium secondary battery of claim 3, wherein the electrolyte additive comprises one or more acrylic compounds represented by <Structural Formula 1> to <Structural Formula 10>:

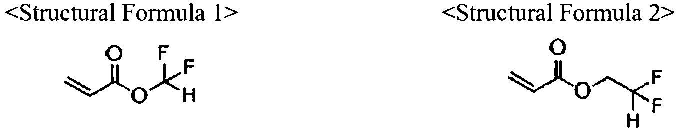

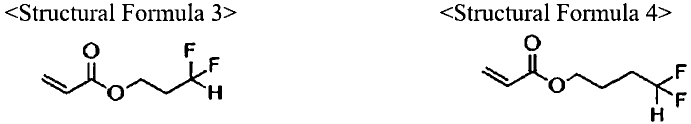

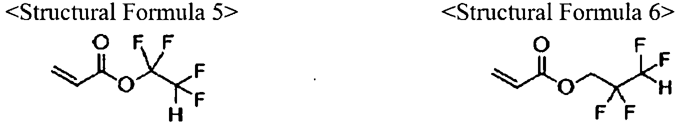

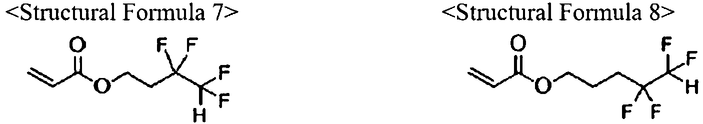

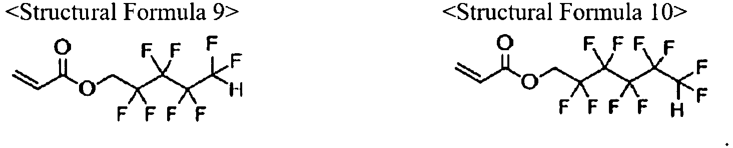

5. The electrolyte composition for the lithium secondary battery of claim 1, wherein the electrolyte additive is included in an amount of more than 0 wt.% to 5 wt.% or less based on a total weight of the electrolyte composition.

6. The electrolyte composition for the lithium secondary battery of claim 1, wherein the electrolyte additive further comprises one or more cyclic carbon compounds among vinylene carbonate (VC), 1,3-propane sultone (PS), ethylene sulfate (ESa), propylene sulfate (PSa), or butylene sulfate (BSa).

7. The electrolyte composition for the lithium secondary battery of claim 6, wherein the cyclic carbon compound is included in an amount of 10 parts by weight or more to less than 50 parts by weight based on 100 parts by weight of the electrolyte additive.

8. The electrolyte composition for the lithium secondary battery of claim 1, wherein the fluorine-substituted linear ester solvent comprises one or more compounds represented by Chemical Formula 2: 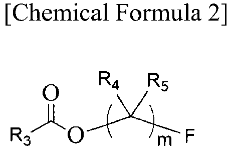 in Chemical Formula 2,
R₃ is hydrogen or a C_{1~6} alkyl group,
R₄ and R₅ are each independently hydrogen, fluoro group or a C₁₋₁₀ fluorinated alkylene group, and
m is an integer of 1 to 6.

9. The electrolyte composition for the lithium secondary battery of claim 1, wherein the fluorine-substituted linear ester solvent comprises one or more among compounds represented by <Structural Formula 11> to <Structural Formula 16>:

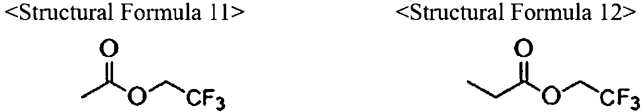

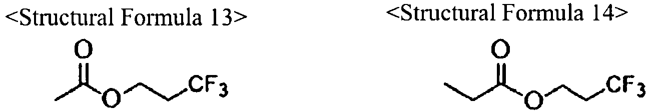

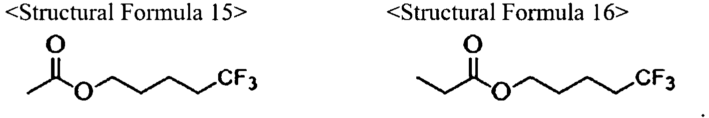

10. The electrolyte composition for the lithium secondary battery of claim 1, wherein the non-aqueous organic solvent further comprises a carbonate-based solvent of ethyl methyl carbonate (EMC), dimethyl carbonate (DMC), diethyl carbonate (DEC), ethylene carbonate (EC), propylene carbonate (PC), butylene carbonate (BC) or a combination thereof.

11. The electrolyte composition for the lithium secondary battery of claim 10, wherein the carbonate-based solvent is included in an amount of more than 0 vol.% to 40 vol.% or less based on a total volume of the non-aqueous organic solvent.

12. The electrolyte composition for the lithium secondary battery of claim 1, wherein the lithium salt comprises Li⁺ as a cation, and comprises one or more of BF₄⁻, B₁₀Cl₁₀⁻, ClO₄⁻, AlO₂⁻, AlCl₄⁻, PF₆⁻, SbF₆⁻, AsF₆⁻, BF₂C₂O₄⁻, B(C₂O₄)₂⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, (C₂O₄)₂PF₂⁻,CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or ((C(CN))₂NC(CF₃))N⁻ as a anion.

13. The electrolyte composition for the lithium secondary battery of claim 1, wherein the negative electrode active material is one or more of silicon (Si), silicon carbide (SiC) or silicon oxide (SiOᵣ, where 0.8≤r≤2.5).

14. A lithium secondary battery, comprising:
an electrode assembly comprising a positive electrode, a negative electrode and a separator provided between the positive electrode and the negative electrode; and
the electrolyte composition according to claim 1, impregnated in the electrode assembly.

15. The lithium secondary battery of claim 14, wherein the positive electrode comprises a positive electrode active layer provided on at least one surface of a positive electrode current collector and comprising a positive electrode active material represented by Chemical Formula 3:
[Chemical Formula 3] Liₓ[Ni_{y}Co_{z}Mn_{w}M¹ᵥ]O₂
in Chemical Formula 3,
M¹ is one or more elements among W, Cu, Fe, V, Cr, Ti, Zr, Zn, Al, In, Ta, Y, La, Sr, Ga, Sc, Gd, Sm, Ca, Ce, Nb, Mg, B, or Mo,
x, y, z, w and v are each 0.9≤x≤1.30, 0.6≤y<1, 0<z≤0.2, 0<w≤0.2, 0≤v≤0.1, provided that y+z+w+v=1.
